Europäisches Patentamt

European Patent Office

Office européen des brevets

(11) Publication number:

**0 322 189**
**A2**

## (12) EUROPEAN PATENT APPLICATION

(21) Application number: 88312059.4

(22) Date of filing: 20.12.88

(51) Int. Cl.⁴: **B32B 27/08** , **B65D 65/40**

(30) Priority: 23.12.87 US 138222
23.12.87 US 138270

(43) Date of publication of application:
**28.06.89 Bulletin 89/26**

(84) Designated Contracting States:
**AT BE CH DE ES FR GB GR IT LI LU NL SE**

(71) Applicant: **AMERICAN NATIONAL CAN
COMPANY**
**8770 West Bryn Mawr Avenue**
**Chicago, IL 60631-3504(US)**

(72) Inventor: **Bauer, Frank Templeton**
**1 Lawrence Court**
**Appleton Wisconsin 54911(US)**
Inventor: **Kim, Yong Joo**
**1089 Eden Drive**
**Neenah Wisconsin 54956(US)**
Inventor: **Genske, Roger Peter**
**971 Nenning Road**
**Neenah Wisconsin 54956(US)**

(74) Representative: **Harvey, David Gareth et al**
**Graham Watt & Co. Riverhead**
**Sevenoaks Kent TN13 2BN(GB)**

(54) **Multiple layer sheet materials and packaging made therefrom.**

(57) Packaging sheet materials (10) are constructed from a plurality of layers of materials selected to confer on packages made therewith improved impact/shock tolerance as measured in a slope drop test. The sheet materials comprise an impact layer (12) comprising a blend of non-elastomeric polymer and a polymer providing elastomeric properties, which is located between a sealant substructure (14) and a substrate substructure (16). The impact layer (12) comprises polypropylene blended with a component which confers elastomer properties, for example polyisobutylene or ethylene butene-1. Two such components are desirably blended with the polypropylene.

The sheet materials (10) can be used for making pouch-type packages and as closure films for preformed tray-shaped packaging containers.

FIG. 1

## MULTIPLE LAYER SHEET MATERIALS AND PACKAGING MADE THEREFROM

This invention relates to multiple layer sheet materials and packaging made therefrom.

More particularly, the invention relates to multiple layer sheet materials, especially those useful for fabricating packages through the formation of heat seals about the periphery of the package. The invention is particularly related to the ability of the packages to tolerate flexure of the package and to tolerate shock stresses generated by impact forces, as when the package is dropped. The preferred sheet materials of the invention include a functional capability to provide barrier to transmission of one or more gases such as oxygen or water vapor.

In forming heat seals in such sheet materials, the amount of heat which is driven through the sheet material to a sealant layer thereof, to soften that layer sufficiently for formation of the heat seals, as a secondary and undesirable function, may be sufficiently intense as to soften an intermediate vinylidene chloride copolymer layer significantly during the formation of the heat seals.

Packages made with conventional sheet materials, to the extent the overall thickness of the sheet material is less than about 0.38 mm, tend to be deficient in impact resistance; especially packages where such sheet materials are used as closure lids on formed trays. In such applications, the lid is the weakest member of the package, and failure of the package typically occurs in the lid sheet material adjacent the heat seal.

"Softening temperature" as used herein means any determinant and measurable temperature which identifies a condition at which the polymer experiences a change which tends to make it softer and more fluid, and subject to flowing at normal conditions used in forming heat seals. While the DSC melting point is generally intended herein, other tests could equally well be used so long as they are applied equally to all the layers being compared.

An object of this invention is to provide improved multiple layer sheet materials wherein there is an impact layer having elastomeric properties and an improved impact tolerance in the resulting sheet material, so that the impact tolerance of packages is improved.

Desirably, such sheet materials provide a barrier to gaseous transmissions through the sheet materials. Such sheet materials may contain a layer comprising vinylidene chloride copolymer.

More particularly, this invention seeks to develop increased impact tolerance at a heat seal locus, while maintaining the ability, in the sheet materials, to form heat seals sufficiently strong to maintain the integrity of a seal throughout the intended use life of a package made with the materials, until it is intentionally opened.

In addressing one or more of the objects, the invention provides a multiple layer sheet material comprising a first sealant sheet structure, for example comprising polypropylene (PP), a second substrate structure comprising at least one polymeric layer, and a third impact layer disposed between the first sealant sheet structure and the second substrate structure. The composition of the impact layer comprises a first component including a polypropylene polymer and, as a second component, a polymeric composition providing elastomeric properties to the impact layer and increased shock tolerance to the multiple layer sheet material. The at least one polymeric layer in the second substrate structure is disposed toward the impact layer.

In preferred embodiments of the invention, the second component of the impact layer comprises either an ethylene butene-1 copolymer containing 85% to 95% ethylene, or a polyisobutylene (PIB), in either case chosen so as to provide the said properties. Especially preferred embodiments include a third component in the impact layer, namely a second polymeric component providing elastomeric properties to the impact layer and shock tolerance to the multiple layer sheet material. Typically that component itself is generally recognized as possessing elastomeric properties.

With respect to the sealant sheet structure, polypropylene may, in some cases, tend to form heat seals which are so strong that they cannot be readily opened for gaining access to the contents of a package. Thus, in certain embodiments of the invention, it is desirable that a polypropylene composition of the sealant substrate be modified in order to reduce the strength of the seal formed, such that the seal is peelable. To that end, the composition of the sealant structure may comprise a combination of a propylene polymer and an ethylene polymer having a density of at least about 0.930, preferably at least about 0.940, most preferably at least about 0.950, and referred to herein as high density polyethylene (HDPE).

Also acceptable in the sealant structure, in place of PP, are other polymers, such as HDPE, whose softening temperatures are below the softening temperature of the outer layer in the substrate.

Further with respect to the sealant structure, it is seen that the preferred compositional materials, such as polypropylene and high density polyethylene, tend to be quite crystalline in their polymeric structure;

and so have a tendency to be somewhat brittle. With respect to that brittleness, in some embodiments, and especially (but not only) those embodiments where the primary polymer in the sealant structure is modified to reduce the seal strength, it is preferred to include, as a component of a sealant structure composition, up to about 20% of a composition providing elastomeric properties to the sealant structure. Preferred materials to provide the elastomeric properties are PIB and elastomeric ethylene butene-1 copolymer containing 85% to 95% ethylene, either one alone, or in combination. The material providing the elastomeric properties to the sealant structure is preferably present in an amount of up to about 20% by weight of the overall composition of the respective layer. Since it usually takes at least about 2% of the elastomeric material to provide measurably improved properties, that is preferably the lower limit of the amount used. A preferred range is about 2% to about 20%.

In certain embodiments of the invention, the substrate structure comprises a layer which provides, for the overall sheet material, an oxygen transmission rate of no more than about 5 cm/m$^2$ day at 23°C., 0% relative humidity.

In certain embodiments, the substrate structure includes a layer which provides for the overall sheet material a moisture vapor transmission rate of no more than about 2 cm/m$^2$ day at 100% relative humidity.

One such family of sheet structures which addresses a specific application of this invention, has at least five layers. The substrate comprises at least three of those five layers. A first layer of the substrate structure can comprise a vinylidene chloride copolymer (VDC) having a first softening temperature. The sealant structure can comprise a layer having a second softening temperature no more than about 20°C. less than the first softening temperature. A fourth layer, between the VDC layer and the sealant structure, has a third softening temperature greater than the first and second softening temperatures, and comprises polyethylene terephthalate (PET). A second layer of the substrate structure has a fourth softening temperature greater than the first and second softening temperatures. The first (VDC) layer of the substrate structure is between the fourth (PET) layer and the second layer of the substrate structure. The third impact layer is between the first sealant structure and the VDC layer, preferably between the first sealant structure and the fourth (PET) layer.

The composition of the third impact layer has, as a first component, a base polymer drawn from the same family of polymers as a major component of the sealant structure, and as a second component, a polymeric composition providing elastomeric properties to the impact layer and increased shock tolerance to the multiple layer sheet material.

All the adjacent layers of the sheet material are adhered respectively to each other.

A major "component" of a layer comprises at least 40% of that layer by weight.

Functionally, heat seals are formed with the sheet materials of the invention by applying a combination of heat and pressure through the sheet material. In the above family of sheet structures, comprising the VDC layer, the heat and pressure are applied through the second layer of the substrate structure to soften the sealant structure and form the heat seals. During the formation of heat seals, the VDC layer is also softened to the point that application of conventional amounts of pressure during the fabrication of the heat seal tends to thin the VDC layer. The fourth PET layer is not softened to the point of thinning under those conditions.

Other polymers may be used in the sealant structure in place of PP, so long as their softening temperatures are below the softening temperatures of both the fourth PET layer and the second layer of the substrate.

Preferred compositions for the second substrate layer are selected from among polyesters, polycarbonates, polyamides and polypropylenes. A highly preferred material for the second substrate layer is PET, which may be the same composition as used for the third layer.

In preferred embodiments of the instant family, and wherein the composition of the sealant structure comprises a polypropylene polymer, and wherein the first component of the third or impact layer thus comprises a polypropylene polymer, the second component of the impact layer comprises PIB.

In other embodiments of this family, the third layer includes, as a third component, an elastomeric ethylene butene-1 copolymer containing 85% to 95% ethylene. Thus, sometimes a three component composition is used for the impact layer wherein the second and third components both contribute, or confer, elastomeric properties to, or on, the impact layer, and wherein both contribute shock tolerance properties to the overall composite of the multiple layer sheet material.

In some embodiments, the sheet material is comprised entirely of extensible materials, such as unoriented polymers. In other embodiments, the sheet material, preferably in the substrate structure, includes one or more layers of a less extensible, and more dimensionally stable, material. Such layers may comprise, for example, metal foil, paper or a molecularly oriented polymer layer such as a biaxially oriented layer of nylon, polypropylene, or polyethylene terephthalate. Another material which is highly suitable for use in the substrate structure is polycarbonate.

In certain embodiments, and especially those incorporating a more dimensionally stable layer, the sheet material includes, between the sealant sheet structure and the impact layer, a layer which provides for the overall sheet material an oxygen transmission rate of no more than about 2 cc/m$^2$ day.

The sheet materials embodying the invention are adapted to readily be made into packages, or to be used in combination with other sheet materials in fabrication of packages.

The invention will now be described in more detail, by way of example only, by reference to certain embodiments thereof, and by reference to the accompanying drawings, in which:

FIGURE 1 is a cross-section of a sheet material embodying the invention, showing generally the substrate structure, the sealant structure, and the intermediate impact layer;

FIGURE 2 shows a pictorial view, partially cut away, of a tray package which is closed with a lid made with a sheet material embodying this invention;

FIGURE 3 shows a pictorial view of a pouch made with sheet material embodying the invention; and

FIGURES 4 - 17 show cross-sections of various exemplary sheet materials embodying the invention.

We have determined that an impact layer characterized by certain base polymer selection and modified by polymeric materials which provide certain elastomeric characteristics, can increase the shock/impact tolerance, and to some extent, the flexural properties, of a sheet material having a sealant structure on one side of the impact layer and a substrate structure on the other side of the impact layer. We have, further, developed an especially preferred family of such sheet materials, as described in more detail hereinafter.

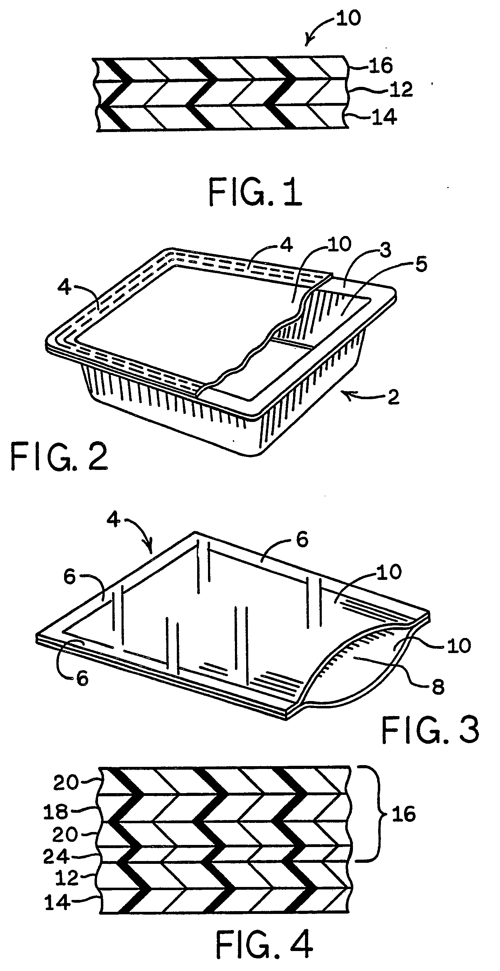

Referring to FIGURE 1, the sheet material 10 has an impact layer 12 disposed between sealant structure 14 and substrate structure 16.

FIGURE 2 shows generally how the flexible sheet materials of the invention are used as lid material in closure of preformed semi-rigid trays 2 as illustrated in FIGURE 2. The sheet materials of the invention can also be used as the entire packaging structure, such as in formation of a pouch as at 4 in FIGURE 3, by bringing portions of the sheet material into facing relationship about a common space and forming heat seals as at 6 in facing portions of sealant structure 14. After a product has been placed in the pouch through opening 8, the remaining open side is sealed closed, completing fabrication of the filled, closed, and sealed packages.

A significant problem being addressed by the inventors herein is provision of a sheet material for preformed, semi-rigid trays such as the tray 2 seen in FIGURE 2, and especially trays which are to be subjected to high thermal stresses, such as processing temperatures in the range up to about 121°C. Such conditions are commonly encountered in the retort processing of such products as food and medical supplies. This invention is directed at providing sheet material for such uses.

It is known to use a sheet material of the order of

/PET/Saran/PP sealant/

as a lid material. But packages made with such lid material are deficient in impact resistance. In pending US application serial number 081,789 filed August 5, 1987, (EP-A-88307161.5) there is disclosed the use of a second (interior layer of PET, whereby the basic structure of the sheet material is

/PET/Saran/PET/PP sealant/,

and wherein the sum of the thicknesses of the two layers of PET in the 4-layer sheet material is the same as the thickness of PET used in the foregoing 3-layer sheet material. And while improvement in impact resistance of the completed package is achieved thereby, and as taught therein, still further improvement, especially in impact resistance is desirable.

Referring to the above 3-layer and 4-layer structures, it is seen that those sheet materials generally comprise a substrate substructure and a sealant layer. The sealant layer may, of course, comprise a plurality of layers as disclosed in US application serial number 045,003, filed April 30, 1987.

In this invention, an impact layer 12 is interposed into the sheet structure between the sealant substructure 14 and the substrate substructure 16. Both the sealant substructure 14 and the substrate substructure 16 are shown in FIGURE 1 as single layers for simplicity of comprehending the structural concept of the invention. As will be seen hereinafter by illustration and discussion, either substructure 14 or 16, or both, may be either a single layer or a plurality of layers.

FIGURES 4-16 illustrate specific examples of sheet structures of the invention. Referring to FIGURE 4, layer 12 is the impact layer and layer 14 is a single layer sealant structure comprising, for example, polypropylene. The substrate substructure 16 comprises an oxygen barrier layer 18 of ethylene vinyl alcohol copolymer (EVOH), or polyvinyl alcohol (PVOH), between two layers 20 of nylon, and an adhesive layer 24. The vinyl alcohol of layer 18 is of the type generally capable of providing good oxygen barrier. Other oxygen barrier materials can, of course, now be designed into the substrate 16. Layers 20 may be any of the nylons generally processable with the selected vinyl alcohol, but are preferably nylon 6. The composition of adhesive layer 24 is selected with respect to the specific compositions chosen for adjacent layers 12 and 20, such that it will serve satisfactorily its bonding function. Generally representative of extrudable resins acceptable for layer 24, and which will usually accommodate coextrusion of the entire sheet material, are the anhydride modified extrudable adhesive resins. Preferred extrudable resins will have strong adhesion to both layer 12 which preferably contains a major component of polypropylene -- e.g. preferably at least 40% polypropylene-- and nylon layer 20. Exemplary of acceptable such resins is the polypropylene-based Admer series of resins from Mitsui Petrochemical, such as QF 500; QF 550; and QF 551. Alternatively, layer 24 may represent an adhesive laminant such as a urethane adhesive. Sheet materials illustrated by FIGURE 4 generally have an oxygen transmission rate of no more than 5 $cm^3/m^2$ day at 23° C., 0% relative humidity (RH).

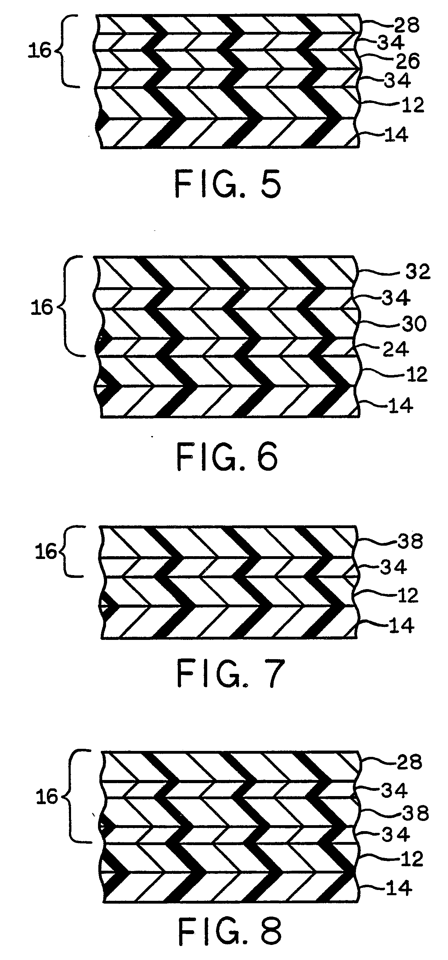

Referring now to FIGURE 5, layer 12 is the impact layer. Layer 14 is the sealant layer comprising polypropylene. Layer 26 is a vinylidene chloride copolymer. Layer 28 is PET. Improved impact tolerance is obtained by the use of the elastomer-modified layer 12. Sheet materials illustrated by FIGURE 5 generally have an oxygen transmission rate of no more than about 3 $cm^3/m^2$ day.

Referring to FIGURE 6, layers 12 and 14 are the impact and sealant layers respectively. Substrate substructure 16 comprises layers 24, 30, 32, and 34. Layer 30 is a polyetheramide copolymer or a blend of polyetheramide and EVOH, in enhancement of oxygen barrier properties. Layer 32 is oriented PET, providing an abuse resistant outer layer which is tolerant of high temperature. Layers 24 and 34 are adhesives suitable for bonding together the respective layers at their corresponding interfaces. layer 34 may be, for example, a curing type urethane adhesive such as Adcote 76T198 from Morton Chemical Company. Layer 24 may be, for example, Admer 550.

FIGURE 7 illustrates a rather uncomplicated example of the invention. Layers 12 and 14 are the impact and sealant layers respectively. Layer 38 is HDPE. Layer 34 is an adhesive such as Adcote 76T198. The substrate 16 comprises layers 34 and 38. The HDPE in layer 38 provides a low moisture vapor transmission rate, less than 2 $cm^3/m^2$ day at 100% RH.

It is seen that layers illustrated as having common, or substantially similar compositions and structures, are numbered herein similarly throughout the several illustrations.

Turning now to FIGURE 8, layers 12 and 14 are the impact and sealant layers respectively. Layer 28 is PET in provision of an abuse resistant, high temperature tolerance outer layer. Layer 38 is HDPE which provides a low moisture vapor transmission rate. Layers 34 are adhesives generally of the curing type urethane such as Adcote 76T198. Substrate substructure 16 includes layers 28, 38, and both adhesive layers 34.

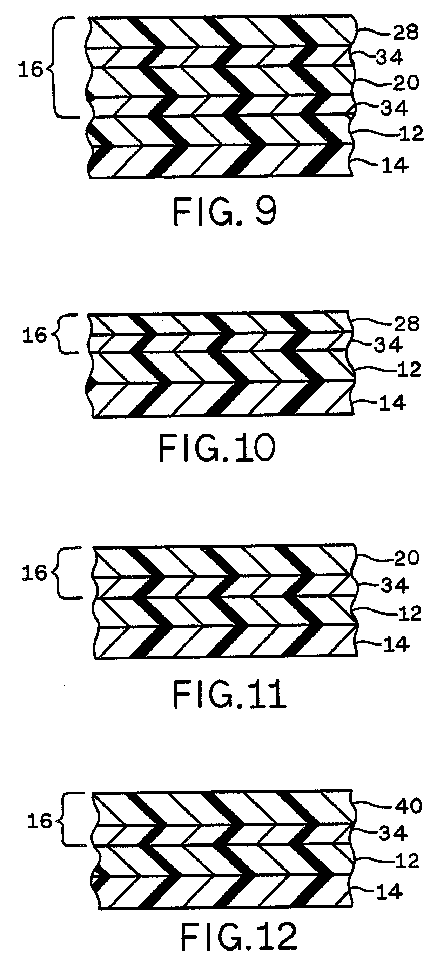

FIGURE 9 illustrates a tough, abrasion resistant structure. Layers 12 and 14 are the impact and sealant layers respectively. Layer 28 is PET. Layer 20 is a polyamide. Layers 34 are adhesives such as Adcote 76T198. Layer 20 may include an EVOH in blend composition. Substrate 16 includes layers 20, 28, and both adhesive layers 34.

FIGURE 10 illustrates another simple structure of the invention in which substrate 16 comprises a layer 28 of PET and adhesive layer 34. Layers 12 and 14 respectively represent the impact and sealant layers.

In FIGURE 11, layers 12 and 14 are the impact and sealant layers, respectively. Layer 20 is nylon, especially a barrier nylon such as Selar PA from DuPont or MXD6 from Mitsubishi Gas Chemical Company; or a polyacrylonitrile. Layer 34 is an adhesive such as Adcote 76T198. Substrate 16 comprises layers 20 and 34.

In FIGURE 12, layers 12 and 14 are the impact and sealant layers, respectively. Layer 40 is polycarbonate. Layer 34 is an adhesive such as Adcote 76T198. Substrate 16 includes layers 34 and 40.

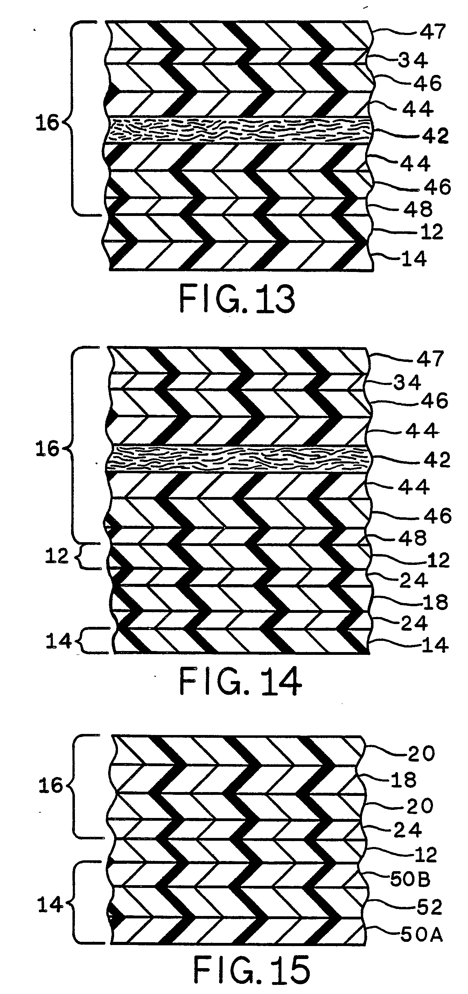

In FIGURE 13, layers 12 and 14 are the impact and sealant layers respectively. Fibrous layer 42, e.g. of paper, provides a readily printable surface, e.g. for presenting a graphic message. Two primer layers 44 of ethylene acrylic acid copolymer (EAA) bond the fibrous or paper layer 42 to two respective layers 46 of low density polyethylene (LDPE). Layer 34 is an adhesive such as Adcote 76T198. Layer 47 is oriented polypropylene (OPP). Substrate 16 includes layer 42, two layers 44, two layers 46, adhesive layer 48 which bonds one LDPE layer 46 to the impact layer 12, adhesive layer 34 and OPP layer 47. Adhesive layer 48 should bond well to both the LDPE of layer 46 and the composition, preferably comprising polypropylene, of layer 12. An example of a commercially available adhesive suitable for layer 48 is AP220L, an anhydride modified LDPE-based adhesive from Mitsubishi Chemical Industries.

In FIGURE 14, layers 12 and 14 are the impact and sealant layers and are separated from each other by a layer 18 of EVOH, which is bonded to layers 12 and 14 by two extrudable adhesive layers 24 of, for example, Admer 550. In this structure, layer 18 of EVOH and the adhesive layers 24 are not functionally part of either impact layer 12, sealant layer 14, or substrate 16. Substrate 16 comprises layer 42 of paper, two layers 44 of EAA, two layers 46 of LDPE, adhesive layer 48 as of AP220L, adhesive layer 34 and OPP layer 47.

Thus it is seen that the sheet materials of the invention may include, in addition to the three primary functional groupings of 12, 14, and 16, further layer structuring. In this case, the EVOH provides a gas impermeable barrier between the sealant layer 14 and the impact layer 12.

In FIGURES 4-14, the sealant structure 14 has been illustrated as a single layer 14. In any of the sheet materials of this invention, however, it is contemplated that the sealant substructure can be a plurality of layers.

Thus FIGURE 15 shows the sheet material of FIGURE 4, but wherein the sealant substructure 14 comprises a 3-layer substructure, comprising two layers 50A and 50B of polypropylene, optionally elastomer-modified such as with a polyisobutylene or an ethylene butene-1 copolymer containing 85% to 95% (mole) ethylene, and a layer 52 of a blend of polypropylene (40% to 70% by weight, preferably 50% to 60%) and HDPE (60% to 30%, preferably 50% to 40%), the layer 52 composition being optionally elastomer-modified (2% by weight up to 40%) such as with a polyisobutylene or an ethylene butene-1 copolymer containing 85% to 95% ethylene. The outer polypropylene layer 50A is subject to contact with other surfaces and objects and so its elastomer-modification content is generally limited to about 10% by weight to avoid tackiness and associated blocking, although up to about 20% can be used with certain elastomers. Interior polypropylene layer 50B is not so subject to external contacts, and so may be more highly modified, i.e. up to 30% or 40% modifier, and indeed may take on many of the properties of impact layer 12, such that it may assist layer 12 in achieving impact/shock tolerance properties for the sheet material.

So layer 50A is specially adapted to creating a bond, having a desired strength, with a facing surface such as the flange 3 of tray 2 (FIGURE 2). Layer 52 is especially adapted by its composition for cohesive failure when a strong opening force is applied. Layer 50B is a bridging, compatibilizing or adhesion-promoting layer, or a combination of those, to enhance the interfacing and joining of sealant structure 14 into the balance of the sheet material. And the composition of layer 50B may include an elastomer-providing component which cooperates with layer 12 in providing impact/shock tolerance to the sheet material. Any of the elastomers which are acceptable for use in layer 12 will be acceptable for use in layer 50B, albeit usually in a lesser fraction.

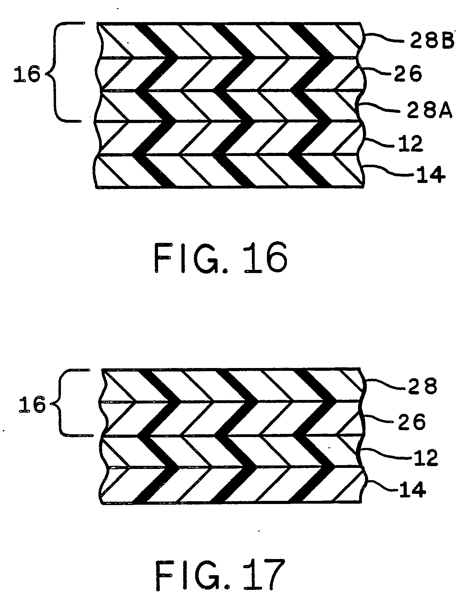

In FIGURE 16, layers 12 and 14 are the impact and sealant layers respectively. Layer 26 comprises a vinylidene chloride copolymer. Layers 28A and 28B illustratively can both comprise PET. Substrate 16 includes layers 26, 28A, and 28B.

In order to provide adequate adhesion between the respective pairs of layers 12, 26, 28A and 28B in the structure of FIGURE 16, adhesives (not shown in FIGURE 16) are provided at the respective interfaces as shown at layers 34 in the related structure shown in FIGURE 5. The adhesives for use at the respective interfaces can readily be determined according to ordinary adhesive selection in the polymer industry. Exemplary of adhesives which are acceptable are the aliphatic urethane curing-type adhesives available from Morton Chemical Company under the tradename Adcote, for example Adcote 76T198. Other suitable adhesives will be known to those skilled in the art.

We have found that, in films where the softening temperature of the sealant structure is at least as great as 50°C. below the softening temperature of the vinylidene chloride copolymer, the amount of heat required to activate the sealant is sufficient to soften the vinylidene chloride copolymer; wherein the embodiments of FIGURE 16 are preferred over embodiments of FIGURES 5 and 17. Sealing structures whose softening parameters more closely approach that of the vinylidene chloride copolymer require even more heat to activate them. It should be comprehended that the sealing heat is conducted through the vinylidene chloride copolymer layer (susceptible as to softening and thinning) in order to reach the sealing structure. This creates a temperature gradient between the susceptible layer and the sealing structure. Also the susceptible layer experiences the best for a longer period of time than the sealing structure, since it is physically closer to the heat source. Thus the higher temperature experienced over a longer period of time, by the susceptible layer, as compared to the sealing structure, means that the susceptible layer may experience a significant softening even though its softening temperature is equal to or a little above the corresponding softening temperature of the sealing structure. The amount by which the softening temperature of the susceptible layer may be above that of the sealing structure, for example layer 14, and still be subject to being softened, depends on the temperature of the seal bar applied at the outer layer of the film.

If a relatively lower temperature is used on the seal bar, lower temperature is experienced by the susceptible layer, and a lesser degree of susceptibility exists. But a lower temperature requires longer sealing time. So in the interest of time economy, a higher temperature is often used. Indeed a temperature gradient of as much as 30° - 40°C. may be used. The susceptible layer may experience, for example, about half of the above gradient, depending, of course, on details of the specific film structure. So films wherein the softening temperature of the susceptible layer is similar to that of the sealing layer, namely up to about 20°C. above the corresponding temperature for the sealant layer, or below that of the sealing layer, experience the above recited susceptibility.

Vinylidene chloride copolymers suitable for use in layer 26 are prepared utilizing such comonomers as methyl, ethyl, isobutyl, butyl, octyl, and 2-ethylhexyl acrylates and methacrylates; phenyl methacrylate; cyclohexyl methacrylate, p-cyclohexylphenyl methacrylate, chloroethyl methacrylate, 2-nitro- 2-methylpropyl methacrylate, and the corresponding esters of acrylic acid; methyl alphachloroacrylate, octyl alphachloroacrylate, methyl isopropenyl ketone, acrylonitrile, methacrylonitrile, methyl vinyl ketone, vinyl chloride, vinyl acetate, vinyl propionate, vinyl chloroacetate, vinyl bromide, styrene, vinyl naphthalene, ethyl vinyl ether, N-vinyl phthalimide, N-vinyl succinimide, N-vinyl carbazole, isopropenyl acetate, acrylamide, methacrylamide or monoalkyl substitution products thereof, phenyl vinyl ketone, diethyl fumarate, diethyl maleate, methylene diethyl malonate, dichlorovinylidene fluoride, dimethyl itaconate, diethyl itaconate, dibutyl itaconate, vinyl pyridine, maleic anhydride, and allyl glycidyl ether. Preferred comonomers are methyl acrylate and vinyl chloride.

Sealant layer 14 has a softening temperature preferably no more than about 20°C., but sometimes up to 50°C., less than the softening temperature of the vinylidene chloride copolymer of layer 26. Layer 28A has a melting point temperature higher than the melting point temperatures of either layer 26 or layer 14. The composition of layer 28A does not soften enough to flow significantly at the process conditions under which the heat seals are formed, and preferably comprises a polyethylene terephthalate.

Reflecting, now, on the overall composite of the disclosure with respect to FIGURES 4-16, it is seen that the substrate 16 can take on a wide variety of configurations; and that it is limited functionally with respect to compatibility, for use in the sheet materials of the invention only by its ability to be flexible, or semiflexible, with thicknesses of 0.025 mm. to 2 mm., preferably 0.05 mm. to 0.50 mm., and its ability to be bonded to the adjacent layer in the sheet material as at impact layer 12. To the extent the sheet material is intended for high tempeature use, such as retort conditions of 121°C. or thereabout, then the composite of the materials used in substrate 16 desirably are selected to have tolerance for exposure to such temperatures.

The impact layer 12 generally comprises, as a base polymer, polypropylene. In some respects, the polypropylene of layer 12 may be considered as a portion of the material used in fabrication of the heat seal, or in holding cohesively together the materials used in forming the heat seal, especially where sealant structure 14 is a single layer. Since layer 12 is intended generally to serve the properties of lending impact tolerance and flexural capabilities to the sheet material, preferably the polypropylene selected for use in layer 12 is of a less crystalline nature compared to other polypropylenes, has a lower softening temperature, and compositionally includes at least a fractional amount of ethylene as a copolymer, preferably on the order of about 2% to about 5% ethylene. In any event, the polypropylene used in the layer 12 composition should have the capability to withstand the temperatures to which the sheet material is to be subjected without excessively thinning, especially during the fabrication of heat seals. Therefore, the ethylene comonomer in the propylene used for layer 12 is usually of a minor amount.

Thus any of the polypropylenes may be used as the first component of the combination in the composition of layer 12. Polypropylenes which are copolymers having about 2 to about 5 mole percent ethylene are preferred, as the copolymer provides some minimum level of additional resilience to polypropylene as compared to a homopolymer. Nonetheless, the term "polypropylene" as used herein with respect to layer 12 is intended to include homopolymers and copolymers except where specified otherwise, since the primary impact tolerance of the sheet material is not so much dependent on the polypropylene as it is on the one or more elastomer-modifying components. Whether the polypropylene is a homopolymer or copolymer, its resilience is enhanced substantially by the incorporation of the elastomeric component. Without the incorporation of the elastomeric component, layer 12 is incapable of performing its intended function of providing flexural properties and improved impact/shock tolerance to the sheet material.

For example, a blend, for layer 12, of 60% by weight of polypropylene and 40% polyisobutylene is superior to the same polypropylene in an unblended composition. Similarly, a blend of 65% by weight polypropylene and 35% by weight ethylene butene-1 copolymer containing about 90% ethylene is superior to the same polypropylene in an unblended composition. While polyisobutylene and ethylene butene-1 copolymer are preferred as the material for providing elastomer properties in layer 20, others of the conventional elastomers may be used as well. Exemplary of these are ethylene propylene rubber (EPR), styrene butadiene styrene (SBS), styrene ethylene butylene styrene (SEBS), ethylene propylene diene monomer (EPDM), styrene isoprene styrene copolymer (SIS), polybutylene, and the like.

Further improved performance of layer 12 in the sheet materials of this invention, and especially as respects impact tolerance of the sheet material when fabricated into a package as illustrated in FIGURES 2 and 3, is sometimes seen when the polypropylene is combined with two materials, as disclosed herein, which provide elastomeric properties. Generally the polypropylene is present in an amount of about 40% to about 70%, preferably about 50% to about 60% by weight of layer 12. A lower level of about 40% is generally preferred in order to maintain at least a minimum degree of the high temperature tolerance of the composition which is provided by the polypropylene. An upper level of about 70% is generally desired in that a minimum amount of about 30% of the material providing the elastomeric properties is generally preferred in order to attain the impact tolerance desired of the sheet materials of the invention. In some cases, however, greater than 70% of the composition may be polypropylene, where the properties of the polypropylene enhance a particular need of the sheet material for the end use intended and/or where other layers assist in provision of impact/shock tolerance, such as, for example, layer 50B of FIGURE 15 or layer 28A of FIGURE 16, or where sealant structure 14 is modified for improved impact tolerance. It should be noted, however, that where the polypropylene is greater than 70% of the composition of layer 12, less of the shock tolerance and flex propeties may be evident in the sheet material unless so compensated by properties of other layers. In some cases, the layer 12 composition may contain up to as high as 90% polypropylene, with only the remaining 10% of the composition of layer 12 comprising the material providing elastomeric properties. While the incorporation of virtually any amount of the second component (namely the material providing elastomeric properties) into the composition will provide some benefit, generally improvement in the impact tolerance and the flexural properties of the sheet material are first evident at a level of about 10% by weight elastomer. And while up to about 60% of the second component providing elastomeric properties may be used, the most desired balance of properties is generally achieved when the material providing elastomeric properties is present in an amount of about 30% to about 60% by weight.

Where the third component, which is the second material providing elastomeric properties, is used in layer 12, the third component is generally present in an amount which represents a ratio of about 1/6 to about 2/3 of the second component. While it is entirely possible that the elastomeric components be present in up to equal amounts, generally the greatest improvements in the impact/shock tolerance and flexural properties are seen where one component is present in a greater amount than the other.

While the use of only one modifier providing or conferring elastomeric properties in or on layer 12 does provide a significant level of improvement in the impact tolerance of the sheet material and its flexural propeties, and while its simplicity is advantageous, further improvements are observed in some embodiments when the impact layer includes two modifiers. The composition of layer 12 thus may include at least three components; the base polypropylene polymer, the first elastomeric modifier, and the second elastomeric modifier. The relationship among the three components is a mystery, in that the use of the second and third components as defined herein may provide a blend having superior properties as compared to a blend having only one of the elastomeric modifiers, but having the same total amount of elastomer modifier. Thus, the most preferred family of some of the compositions of layer 12 is that which includes three components, within the ranges specified.

While polypropylene is illustrated herein as the composition for the base polymer of layer 12, the composition of the base polymer for layer 12 is dependent on, and is usually the same as, the base polymer selected for the sealant layer 14. Thus where sealant layer 14 is, for example, a polyethylene (i.e. HDPE), then the base polymer for layer 12 can also be a polyethylene or ethylene copolymer i.e. HDPE, MDPE, LDPE, one of the linear polyethylene copolymers such as LLDPE, or an ethylene copolymer. The polyethylene is modified by an elastomer as taught herein And while the use of a material other than polypropylene is acceptable, the discussion herein will emphasize the polypropylene, since polypropylene is the preferred material.

In addressing the technical issues surrounding the composition of sealant layer 14, it is seen that heat tolerance and heat stability are important to the functioning of the sheet material in high temperature environments. For those applications requiring these parameters, propylene polymers are seen to be excellent for tolerating the severe processing conditions. Also, the sealability of propylene polymers to, for example, formed trays having a propylene based surface, is excellent. To the extent propylene homopolymer or propylene copolymer is used by itself as the sealant substructure 14 for sheet material 10, the adhesion between sealant substructure 14 and flange 3 of the tray as seen in FIGURE 2, and the cohesive strength of sealant substructure 14, are so strong that the ability to open the package may be impeded.

The applicants herein have found a particularly advantageous capability to control the peel strength of seals made with the sheet material, while providing an acceptably strong seal for protecting the contents on the interior of the package. This capability is achieved by providing a special family of blend compositions of propylene polymers for at least one layer of sealant substructure 14. In general, this special family of blend compositions is a combination of about 65% to about 95% by weight of a propylene homopolymer or copolymer and conversely about 35% to about 5% of an ethylene polymer, or copolymer, having a density of at least about .930, preferably at least about 0.940, most preferably at least about 0.950, referred to hereinabove as HDPE. Such a blend layer is seen at 52 in FIGURE 15. The special blend compositions can also be used in any of the single layer sealant substructures 14, as in the embodiments illustrated in FIGURES 4-14, 16 and 17. To the extent the propylene polymer is a homopolymer or copolymer containing up to about 5 percent ethylene, the larger fractions of HDPE are preferred in the blend composition, up to about 40% HDPE. To the extent the propylene polymer contains more ethylene, such as containing 20% ethylene and 80% propylene, then smaller fractions of HDPE are preferred in the blend composition, such as 10% to 20%.

The high density polyethylene can have a density as low as 0.930 and still provide some control of the seal strength of layer 14. However, higher density polyethylenes generally are more effective. So a density of at least about 0.940 is preferred, with densities of at least about 0.950 being most preferred.

In general, as increasing amounts of propylene are used in the composition of layer 14, the force required to peel the package open becomes commensurately greater. To the extent that the sheet material 10 has excellent interlayer adhesion and appropriate layer cohesive strengths, these greater peel strengths are acceptable, and thus up to about 90% propylene polymer may be used. To the extent the interlayer adhesion within sheet material 10 is of a lesser degree, using high amounts of propylene (for example over 80% of a copolymer having 95% or more propylene) can result in delamination within the sheet material 10 when an attempt is made to peel sheet material 10 from the closed and sealed package. Thus where interlayer adhesions are more moderate, it is desirable to use less propylene polymer in the blend, and respectively more ethylene. Preferred compositions range between about 65% and about 75% by weight propylene and about 35% to about 25% HDPE. As the fraction of propylene polymer decreases below abut 65%, the strength of the seal fabricated with layer 14 may be reduced to the point where shock/impact resistance of the sealed package is reduced and the preferred seal strength is not achieved.

The adhesion between the layers in sheet material 10 is affected by the tendency of the sheet material to elongate under elongation stresses. It can also be affected by compression of one or more of the layers during the heat sealing process. To the extent the sheet material can be elongated, the elongation puts stresses on the interfaces between the several layers, as each of the differing individual layers responds to the stresses somewhat differently, and according to the properties of its own composition. This tends to stress the interfacial adhesion and thus weaken the adhesion at those respective interfaces. Layer compression has a similar effect, in applying lateral and longitudinal stresses to layer interfaces.

Thus those sheet structures 10 which can be elongated, or undergo significant compression during heat sealing, generally work best when they are combined with a sealing layer 14 which comprises a blend of propylene and ethylene polymers in the lower end of the range of propylene polymer, wherein the lid can be peeled off with more modest forces. On the other hand, since higher fractions of propylene polymer do yield packages having stronger seals and stronger cohesion in layer 14, higher fractions of propylene polymer are preferred where their use can be tolerated. Thus the amount of propylene polymer in the blend of layer 14 is generally in the higher end of the range for those sheet materials which have less extensibility, such as provided by a stabilizing layer such as paper.

The character and amount of HDPE used in the composition of layer 14 is preferably selected with reference to the nature of the propylene polymer which is contemplated for use in the composition, and the adhesive and cohesive strengths in and between the several layers in the sheet material. A relatively larger amount of HDPE is used in the blend where the propylene content of the propylene polymer is in the upper portion of its range. To the extent the amount of propylene in the propylene polymer is reduced, lesser amounts of HDPE are used in the composition. In most cases, the propylene polymer is a copolymer having at least a small amount of ethylene, i.e. 2%, in its composition.

With respect to the composition of layer 14 comprising the base polymer of, for example, polypropylene and a modifying material, such as high density polyethylene, for reducing the strength of the seal formed by layer 14, the percentages used herein are used only with respect to those two components. To the extent a third component, such as, for example, a component providing elastomeric properties is incorporated into layer 14, the fractional compositions recited for the base polymer and the modifying polymer are not altered according to the incorporation of the elastomer. Rather, the fraction of the elastomer is considered with respect to the overall composition of layer 14. To that end, the composition of, for example, 65% propylene polymer and 35% HDPE may be blended with an elastomeric material such as a polyisobutylene, or an ethylene butene-1 copolymer as earlier recited. A preferred blend for the composition of layer 14 comprises, for example, 20% of an elastomeric component and 80% of the composition of the base polymer and the modifying polymer, wherein the base polymer is about 65% and the modifying

9

polymer about 35% of that subcombination of 80%.

In some cases, it has been found advantageous to use the ethylene butene-1 copolymer and polyisobutylene in combination as the elastomeric modifier for layer 14. In some, less preferred, embodiments, it is satisfactory to use the polyisobutylene with another elastomer other than the ethylene butene-1 copolymer or to use the ethylene butene-1 copolymer with another elastomer other than polyisobutylene. Exemplary of these other elastomers which may serve as the second elastomeric component in layer 14 are SBS, SEBS, SIS, EPR, polybutylene, EPDM, and 'the like. Certain of the materials providing elastomeric properties may also act to reduce seal strength, depending on the composition of the surface to which layer 14 is to be sealed. So the use of elastomer is coordinated with the use of any seal strength modifier such as HDPE.

FIGURE 2 illustrates generally the functioning of the sheet material of the invention as a lid on a tray 2. In sealing of the sheet material 10 to the tray 2, sealant substructure 14 is joined to flange 3, and thus comprises the sealant layer as previously discussed. As the sheet material 10 is peeled from the tray flange in opening the tray, a tearing typically occurs in sealant substructure 14 where the sealant substructure is sealed, as at 4, to the flange 3, to thus provide access to the interior 5 of the container. The peeling of the sheet material 10 away from flange 3 is usually accompanied by a tearing in sealant substructure 14 which comprises a cohesive failure in sealant substructure 14 in the area of the seal 4 at flange 3, especially where a modifying material such as HDPE is used as a component of at least one of the layers in sealant substructure 14. In some cases, however, the sealant substructure 14 peels cleanly away from the sealed area 4 at flange 3 without leaving any significant portion of layer 14 on the flange. Typically, though, the removal of sheet material 10 from the package by way of peeling it from flange 3 results in a separation of substructure 14 in the seal area 4 such that a first portion of substructure 14 remains on the flange and a second portion is removed from the sheet material 10.

Turning now to the structures of FIGURES 16 and 17, it is seen that layer 28B (FIGURE 16) or 28 (FIGURE 17) generally forms the outer layer of the film. Layer 28B or 28 is that layer which is in contact with conventional heat sealing equipment when the heat seal is formed by forcing heat through the film to soften and fuse sealant layer 14 in formation of the heat seal. Thus the softening temperature of the composition of the outer layer must be greater than the softening temperature of the composition of layer 14. To the extent the softening temperature of layer 14 is greater, then the outer layer composition would be softened during the formation of heat seals. As a result, the material from the outer layer would stick or otherwise deform while in contact with the equipment that provides the heat for the formation of heat seals. So long as the composition of the outer layer provides the function of being thermally stable during the formation of the heat seals, its composition can be selected with relative freedom, and dependent on parameters other than its thermal stability. Exemplary of materials preferred for the outer layer composition are polyesters, polycarbonates, polyamides, and polypropylenes. A highly preferred material for use in the outer layer is polyethylene terephthalate.

The films of the invention, as seen in FIGURE 16, preferably provide an intervening layer 28A between the vinylidene chloride copolymer in layer 26 and the sealant layer 14. It is desirable that the softening temperature of the composition of layer 28A be great enough that the composition of layer 28A is not melted, or otherwise sig nificantly softened such that it flows, at the conditions at which the heat seal is fabricated in the formation of a package. The heat sealing conditions vary somewhat with each commercial operation, and sometimes with each operator. These variances can readily be accommodated within the spirit and context of the invention.

The invention has been described herein with respect to the required components of the sheet material 10 being impact layer 12, sealant substructure 14, and substrate 16. However, as illustrated in FIGURE 14, the invention is entirely functional if additional layers of material are used between layers 12 and 14. Within that context, however, it is preferred that the advantageous properties of impact tolerance and flexural properties provided by layer 12, and appropriate interlayer adhesions, are maintained. Likewise, additional layers may be used elsewhere in the sheet material.

## EXAMPLE 1

A sheet material as shown in FIGURE 5 is made as follows. Polyethylene terephthalate film .024 mm. thick is adhesively laminated to a film of vinylidene chloride vinyl chloride copolymer using Adcote 76T198. The vinylidene chloride copolymer layer is 0.025 mm. thick, and is obtained from Dow Chemical Company as HB-100. The polyethylene terephthalate is Mylar from DuPont. An impact/sealant composite structure is then fabricated by coextruding impact layer 12 and a sealant layer 14 in an air cooled blown tubular coextrusion process. The composition of layer 14 is 70% of a polypropylene polymer, containing about 2.7% ethylene and 30% of an HDPE having a density of 0.958. The composition of layer 12 is 56% polypropylene, about 33% polyisobutylene, and about 11% of an elastomeric ethylene butene-1 copolymer. Layer 14 is approximately 0.025 millimeter thick. Layer 12 is approximately 0.08 mm. thick. Layer 28 is adhesively laminated to layer 26 using Adcote 76T198. The resulting sheet material is thus about 0.16 mm. thick.

## COMPARATIVE EXAMPLE 1

A sheet material is made as in EXAMPLE 1 except that the impact layer is replaced by a 0.025 mm. thick layer having the same composition as the sealant layer. The resulting sheet material is thus about 0.16 mm. thick.

## EXAMPLE 2

A sheet material representing the structure of FIGURE 16 is made as follows. Polyethylene terephthalate films, 0.012 mm thick are adhesively laminated to both sides of a film of vinylidene chloride vinyl chloride copolymer which is 0.05 millimeter thick. The vinylidene chloride copolymer film is obtained from Dow Chemical Company as HB-200. The polyethylene terephthalate is Mylar from DuPont. An impact/sealant substructure is then fabricated for layers 14 and 12 by coextruding those two layers in an air cooled blown tubular coextrusion process. The composition of layer 14 is 70% by weight a polypropylene polymer, containing about 2.7% ethylene as a block copolymer, namely HIMONT SA-752, from Himont Company, and 30% by weight of an HDPE having a density of 0.958. The composition of layer 12 is about 56% polypropylene, about 33% polyisobutylene, and about 11% of an elastomeric ethylene butene-1 copolymer containing 90 mole percent ethylene. Layer 14 is approximately 0.025 millimeter thick. Layer 12 is approximately 0.08 mm. thick. Layers 28A and 28B are each approximately 0.012 millimeter thick, and are adhesively laminated to layer 26 using Adcote 76T198. The resulting sheet material is thus about 0.18 mm. thick.

## EXAMPLE 3

A sheet material is made as in EXAMPLE 2 except that the sealant layer 14 is about 0.019 millimeters thick and the impact layer 12 is about 0.057 millimeters thick. In addition, a titanium dioxide color concentrate in a polypropylene base polymer is used in impact layer 12, with the concentrate being approximately 6% of the weight of the layer 12 composition. Overall thickness of the sheet material is about 0.15 mm.

## COMPARATIVE EXAMPLE 2

A sheet material is made as in EXAMPLE 3 except that 0.057 mm. of polypropylene copolymer containing 2.7% ethylene is used in place of the impact layer. The overall sheet material thickness is about 0.15 mm.

## EXAMPLE 4

A sheet material is made as in EXAMPLE 3 except that the impact layer 12 is 0.05 millimeter thick and the sealant layer is 0.025 millimeter thick and is a blend of 60% polypropylene and 40% HDPE.

## EXAMPLE 5

A sheet material is made as in EXAMPLE 4 except that the composition of the sealant layer is 65% polypropylene and 35% HDPE.

## EXAMPLE 6

A sheet material is made as in EXAMPLE 5 except that the composition of the sealant layer is about 63% polypropylene, and 30% HDPE and about 7% polyisobutylene.

## EXAMPLE 7

A sheet material is made as in EXAMPLE 4 except that the composition of the sealant layer is about 65% polypropylene, about 30% HDPE and about 5% polyisobutylene.

## EXAMPLE 8

A sheet material is made as in EXAMPLE 3 except that the composition of the impact layer is the same as the impact layer used in EXAMPLE 2.

## EXAMPLE 9

A sheet material is made as in EXAMPLE 2 except that the impact layer is 0.05 mm. thick. The overall thickness of the sheet material is about 0.15 mm.

## EXAMPLE 10

A sheet material is made as in EXAMPLE 9 except that the interior layer of PET is omitted. The overall thickness of the sheet material is about 0.14 mm.

## COMPARATIVE EXAMPLE 3

A sheet material is made as in EXAMPLE 10 except that 0.05 mm. of polypropylene copolymer is used in place of the 0.05 mm. impact layer of EXAMPLE 10.

## EXAMPLE 11

A sheet material is made as in EXAMPLE 1 except that the substrate 16 of FIGURE 4 is used in place of the substrate 16 (layers 26 and 28) of FIGURE 5. In this example, the entire 6-layer structure is obtained by a single coextrusion process. Layer 18, about 0.01 mm. thick, is EVOH containing 29% ethylene. Layers 20 are nylon 6, about 0.025 mm thick each. Extrudable adhesive layer 24 is Admer QF-550 and is just thick enough to provide good adhesion, at about 0.005 mm.

12

## EXAMPLE 12

A sheet material is made as in EXAMPLE 1 except that the substrate 16 of FIGURE 6 is used in place of the substrate of FIGURE 5. In this example, the layers 12, 14, 30 and 36 are coextruded. Layer 30 is a blend of 50% PEBAX 5512 from ATO CHEMIE and 50% Nippon Gohsei EVOH Soarnol ET containing 38% (mole) ethylene; layer 30 being 0.012 mm. thick. Extrudable adhesive layer 24 is Admer QF-550 and is just thick enough to provide good adhesion, at about 0.004 mm.

## EXAMPLE 13

A sheet material is made as in EXAMPLE 1 except that the substrate 16 of FIGURE 7 is used in place of the substrate of FIGURE 5. In this example, a single layer of HDPE 0.025 mm. thick is laminated to the impact layer using Adcote 76T198 adhesive.

## EXAMPLE 14

A sheet material is made as in EXAMPLE 13 except that a layer of oriented PET 0.012 mm. thick, obtained as Mylar from DuPont Company, is adhesively laminated to the HDPE layer using the 76T198 adhesive, to thus make a sheet material as illustrated in FIGURE 8.

## EXAMPLE 15

A sheet material is made as in EXAMPLE 14 except that a layer of polyamide 0.025 mm. thick is used in place of the HDPE layer to make a sheet material as illustrated in FIGURE 9. The polyamides used to make the samples are Selar PA from DuPont and MXD6 from Mitsubishi Gas Chemical.

## EXAMPLE 16

A sheet material is made as in EXAMPLE 13 except that a layer of oriented PET 0.024 mm. thick, obtained as Mylar from DuPont Company, is used in place of the HDPE layer, to make a sheet material as illustrated in FIGURE 10.

## EXAMPLE 17

A sheet material is made as in EXAMPLE 16 except that a layer of polyamide 0.024 mm. thick is used in place of the HDPE layer to make a sheet material as illustrated in FIGURE 11. Polyamide materials used to make the samples are Selar PA from DuPont and MXD6 from Mitsubishi Gas Chemical. Samples are also made using polyacrylonitrile.

## EXAMPLE 18

A sheet material is made as in EXAMPLE 17 except that the entire sheet material is made as a coextrusion using Admer QF-550 extrudable adhesive in place of 76T198.

## EXAMPLE 19

A sheet material is made as in EXAMPLE 17 except that a layer of polycarbonate 0.012 mm. thick is used in place of the polyamide layer, to make a sheet material as illustrated in FIGURE 12.

## EXAMPLE 20

A sheet material is made as in EXAMPLE 1 except that the substrate 16 is that illustrated in FIGURE 13. Thus a layer of paper 42 at 65 gm/m$^2$ is extrusion laminated on both surfaces to layers of LDPE 0.025 mm. thick using, as the extrusion laminate, primer coatings of EAA on each side of the paper, to thus make a 5-layer substructure of LDPE/EAA/Paper/EAA/LDPE. This 5-layer substructure is then extrusion laminated to the impact layer using a Mitsubishi Chemical Company Industries extrudable adhesive AP 220L, which is an anhydride modified low density polyethylene, to thus make a sheet material as illustrated in FIGURE 13. A layer of OPP, 0.012 mm. thick is laminated to the outer layer of LDPE using Adcote 76T198.

## EXAMPLE 21

A sheet material is made as in EXAMPLE 20 except that the impact layer and the sealant layer are separately fabricated and a 0.012 mm. layer of EVOH containing 31 mole percent ethylene is interposed between the sealant layer and the impact layer. Extrudable adhesive Admer QF-550 is used on both sides of the EVOH to bond the EVOH to the respective impact and sealant layers.

## EXAMPLE 22

A sheet material is made as in EXAMPLE 11 except that a 3-layer sealant substrate is used in place of the single sealant layer used in EXAMPLE 11. The 3-layer sealant substructure is formed by coextrusion, along with the impact layer. The interior layer is compounded by mixing together pellets of 2 parts polypropylene containing 2.7% ethylene as random copolymer and 1 part HDPE, density .958, to make a base polymer masterbatch. To 72 parts by weight of the masterbatch is added 23 parts by weight of a polyisobutylene concentrate containing 65% polyisobutylene and 35% polypropylene; and 5 parts by weight of ethylene butene-1 copolymer containing 90% ethylene. The resulting mixture of pellets is 56% by weight polypropylene, 24% high density polyethylene, 15% polyisobutylene, and 5% of an ethylene butene-1 copolymer containing 90% ethylene. The two outer layers of the 3-layer structure are polypropylene copolymer containing 2.7% ethylene. The interior, 4-component mixture layer is 0.025 mm. thick. The two outer layers are each about 0.012 mm. thick.

The sheet materials so made in the above EXAMPLES all have improved impact tolerance as compared to similar sheet materials, but lacking the modifying materials providing the elastomeric properties in the impact layer, especially where the modifying materials themselves exhibit elastomeric properties.

The sheet materials of EXAMPLE 2 are used to fabricate lids for preformed trays as seen in FIGURE 2, wherein the trays have a sealing surface comprising polypropylene. Closed and sealed packages are formed by fabricating heat seals wherein the sheet material of the lid is sealed to the flanges of the trays as illustrated in FIGURE 2.

The films of Example 1 and Comparative Example 1 are used to provide a closure lid for sealing to semi-rigid trays such as is illustrated as tray 2 in FIGURE 2. The tray flange 3, to which the subject lid material is sealed, is about 1.3 mm thick, with a sealing surface layer about 0.25 mm. thick and having a composition comprising a blend of 60% polypropylene and 40% high density polyethylene. At the other periphery, the trays are about 159 mm. long by about 114 mm. wide.

Before formation of the heat seal, to close the package, as seen in FIGURE 4, 340 milliliters of water are inserted into the tray as content. Finally the lid is applied, and sealed to the tray to form the closed and sealed package. The closed and sealed packages are retort processed at 121° C. with about 1.75 Kg/cm$^2$ of pressure for 30 minutes of cook time followed by 20 minutes of cooling. Come-up time is 15 minutes.

14

The thus processed sealed packages are subjected to the standard USDA Immediate Container Abuse Test, without overwrap, using a standard drop chute apparatus. This test is intended to simulate dropping of individual packages on a controlled, reproducible basis.

The chute is inclined at an angle of 15° from the vertical and has a rigid base plate at a 90° angle to the chute, also the direction of fall. The chute itself has guide rods or iron corner guides, continuous from the top release point of contact to the base. The chute is fitted with a package release mechanism.

Each package is dropped twice, first on its longer side, and then on its shorter end. The packages impact the rigid base with an impact of about 35 cm. kg.

Packages representing Comparative Example 1 and Example 1 are drop tested in the manner described above. Overall, 0% out of 35 packages of Comparative Example 1 so tested survive both drops intact, whereas 23% out of 53 packages of Example 1 so tested survive both drops intact. Failures typically occur by splitting of the lid at the inner sealant junction.

Sheet materials of EXAMPLES 9 and 10 are also used to fabricate lids for pre-formed trays as seen in FIGURE 2, wherein the trays have a sealing surface comprising polypropylene. Closed and sealed packages are formed as above by fabricating heat seals wherein the sheet material of the lid is sealed to the flanges of trays. These tray flanges 3, to which the subject lid material is sealed, are also about 1.3 mm. thick, with sealing surface layer about 0.25 mm. thick and having composition comprising a blend of 60% polypropylene and 40% high density polyethylene. These trays also are about 159 mm. long by about 114 mm. wide. The filling, closing, and testing of the trays is the same as for the trays of EXAMPLE 1.

Packages representing EXAMPLES 9 and 10 and Comparative EXAMPLES 2 and 3 were drop tested in the manner described above.

Test results show that the sheet materials of the invention have better survival rates than sheet materials without the herein recited impact layer between the sealant structure and the substrate structure. Thus, the improved sheet structures of the invention result in a closed package having an improved impact tolerance.

It is seen from Table 1 following that all the packages of Comparative Example 3, which contained neither an impact layer nor an interior PET layer, fail the drop tests. When an impact layer is included (EXAMPLE 10) 23% of the packages survive the testing. When a PET layer is included, but not an impact layer (Comparative Example 2), 60% of the packages survive the testing. But when both an impact layer and the interior PET layer (EXAMPLE 9) are included, 94% of the packages survive the drop testing.

TABLE 1

|  | Number Being Tested | Number Surviving Test | Percent Surviving Test |
|---|---|---|---|
| Ex. 9 | 36 | 34 | 94% |
| Ex. 10 | 53 | 12 | 23% |
| Comp. Ex. 2 | 48 | 29 | 60% |
| Comp. Ex. 3 | 35 | 0 | 0 |

Clearly, the sheet materials of EXAMPLES 9 and 10 result in closed packages having greater impact tolerance than similar sheet materials but wherein the impact layer 12 and interior PET layer 28A are omitted. And the incorporation of both the impact layer and the interior PET layer results in a dramatic improvement in the impact tolerance for these preferred embodiments.

As used herein, increased shock tolerance or impact tolerance is measured with respect to the same sheet material but without the asserted responsible component material.

The sheet materials of this invention are highly desirable for use as closure members on packages having other sheet structures such as that seen in FIGURE 2, wherein the sheet materials 10 of the invention are used to provide lids on otherwise formed receptacles 2. Thus are the sheet materials of the invention highly adapted and highly satisfactory for use as lid stock in preformed trays as seen in FIGURE 2.

The sheet materials of the invention are also highly satisfactory for use in fabrication of pouches, wherein the films of the invention comprise essentially all of the wall area of the package structure as seen in FIGURE 3. The FIGURE 3 illustration, of course, shows the package opened on one end for the insertion of the product after which a corresponding heat seal is used to close that open end to complete closure of the package.

For the sheet materials of the invention as illustrated in FIGURES 4 - 16, the overall sheet material thickness is typically of the order 0.04-0.50 mm., preferably about 0.06-0.40 mm. thick, most preferably about 0.10-0.30 mm. Sheet materials as in the embodiment of FIGURE 16 are most preferably about 0.10 to about 0.18 mm. thick.

The temperature of seal equipment applied to the outer layer of the sheet material varies, depending on, among other things, the compositions of especially the outer layer of substrate 16 which contacts the seal equipment, and the seal layer as at 14 which forms the seal. Conventional amounts of seal pressure usually are in the range of 2.8 kg/cm$^2$ to 6.3 kg/cm$^2$, and commonly 2.8 Kg/cm$^2$ to 4.2 Kg/cm$^2$. Typical dwell time is 0.25 to 2.0 seconds, more commonly 1-1.5 seconds. The seal condi tions, of course, depend on the specific substructure 16 selected for a given embodiment.

Thus it is seen that the invention provides an improved multiple layer sheet material having a substrate substructure in combination with a sealant substructure, and an elastomer-modified impact layer between the sealant substructure and the substrate substructure. The improved multiple layer sheet materials have increased impact tolerance as compared to those sheet materials which do not include the impact component which provides the elastomeric properties. The improved multiple layer sheet materials provide increased impact tolerance in a package while maintaining the ability in the sheet materials to form strong heat seals.

The invention especially provides an improved multiple layer polymeric sheet material having an interior layer of vinylidene chloride copolymer (as at FIGURE 16) in combination with a sealant layer, and as impact layer between the sealant layer and the vinylidene chloride copolymer layer, and wherein the sealant layer composition has a softening temperature similar to or higher than the softening temperature of the vinylidene chloride copolymer layer. The improved multiple layer sheet materials have increased impact tolerance as compared to those sheet materials which do not include the impact layer, which contains a base polymer and the modifying elastomer.

Those skilled in the art will now see that certain modifications can be made to both the compositions of the layers and to the layer structuring without departing from the spirit of the invention. And while the invention has been described above with respect to its preferred embodiments, it will be understood that the invention is capable of numerous rearrangements, modifications, and alterations and all such arrangements, modifications, and alterations are intended to be within the scope of the appended claims.


## Claims

1. A multiple layer sheet material, comprising:
   (a) a first, sealant sheet structure (14) comprising a polymeric layer;
   (b) a second, substrate structure (16) comprising at least one polymeric layer, and
   (c) an impact layer (12) disposed between the sealant sheet structure (14) and the substrate structure (16), the composition of said impact layer (12) comprising (i) as a first component, a non-elastomeric polymer and (ii) as a second component, a polymeric composition providing elastomeric properties to said impact layer and increased shock tolerance to said multiple layer sheet material.

2. A sheet material according to claim 1, wherein the sealant structure (14) comprises polyethylene or an ethylene copolymer and wherein said first component of said impact layer comprises polyethylene or an ethylene copolymer.

3. A sheet material according to claim 1 or claim 2, wherein said second component of the impact layer is selected from polyisobutylene and ethylene butene-1 copolymer containing 85% to 95% ethylene and provides the said elastomeric properties.

4. A sheet material according to claim 3, and including, as a third component of the impact layer, a second polymeric component providing elastomeric properties to said impact layer.

5. A sheet material according to any of claims 1 to 4, wherein said first sealant sheet structure comprises a combination of polypropylene and a polyethylene having a density of at least about 0.930.

6. A sheet material according to claim 5, wherein said sealant sheet structure comprises, as a third component, a polymer selected from polyisobutylene and ethylene butene-1 copolymer containing 85% to 95% ethylene and providing elastomeric properties.

7. A multiple layer sheet material, comprising:
   (a) a first, sealant sheet structure (14) comprising polypropylene;
   (b) a second, substrate structure (16) comprising at least one polymeric layer; and

(c) an impact layer (12) disposed between the sealant sheet structure (14) and the substrate structure (16), the composition of said impact layer (12) comprising (i) a first component including a polypropylene polymer and (ii) as a second component, a polymeric composition providing elastomeric properties to said impact layer and increased shock tolerance to said multiple layer sheet material, said at least one polymeric layer in the substrate structure being disposed toward the impact layer.

8. A sheet material according to claim 7, wherein the second component of the impact layer is selected from polyisobutylene and ethylene butene-1 copolymer containing 85% to 95% ethylene and provides the said elastomeric properties.

9. A sheet material according to claim 7 or claim 8, including, as a third component of the said impact layer, a second polymeric component providing elastomeric properties to said impact layer.

10. A sheet material according to claim 7, 8 or 9, wherein the first sealant sheet structure (14) comprises a combination of polypropylene and a polyethylene having a density of at least about 0.930.

11. A sheet material according to claim 10, wherein the sealant sheet structure further comprises, as a third component, a polymer selected from polyisobutylene and ethylene butene-1 copolymer containing 85% to 95% ethylene and providing elastomeric properties.

12. A sheet material according to any of claims 7 to 11, wherein the sheet material has an overall oxygen transmission rate of no more than about 5 cc/m$^2$ day at 23°C, 0% relative humidity.

13. A sheet material according to any of claims 7 to 12, wherein the sheet material has an overall moisture vapor transmission rate of no more than about 2 cc/m$^2$ day at 100% relative humidity.

14. A sheet material according to any of claims 7 to 13, wherein the substrate structure (16) comprises a fibrous layer (e.g. 42), the said at least one polymeric layer in the substrate structure being between the fibrous layer and the impact layer (12).

15. A sheet material according to any of claims 7 to 14 including, between the sealant sheet structure (14) and said impact layer (12), an oxygen barrier layer, the sheet material having an overall oxygen transmission rate of no more than about 5, preferably no more than 2 cc/m$^2$ day at 23°C and 0% relative humidity.

16. A sheet material according to any of claims 7 to 15, wherein said substrate structure comprises polyethylene terephthalate.

17. A sheet material according to any of claims 7 to 15, wherein said substrate structure comprises a polymer selected from amide polymer, amide copolymers and acrylonitrile polymers and copolymers.

18. A sheet material according to any of claims 7 to 15, wherein said substrate structure comprises a polycarbcnate.

19. A sheet material according to any of claims 7 to 15, wherein said substrate structure comprises a vinylidene chloride copolymer.

20. A multiple layer sheet material, comprising:

(a) a first layer (26) of vinylidene chloride copolymer, said first layer having a first softening temperature;

(b) a second polymeric sealant layer (14) having a second softening temperature no more than 20°C less than said first softening temperature;

(c) a third layer (28A), between said first and second layers (26, 14), said third layer having a third softening temperature greater than said first and second softening temperatures, and comprising polyethylene terephthalate;

(d) a fourth polymeric layer (28B) having a fourth softening temperature greater than said first and second softening temperatures, said first layer (26) being between said third and fourth layers (28A, 28B); and

(e) a fifth impact layer (12) between said second and third layers (14, 28A), the composition of said impact layer comprising (i) as a first component, a base polymer drawn from the same family of polymers as a major polymeric component comprising at least 40% by weight of said second sealant layer (14), and (ii) as a second component, a polymeric composition providing elastomeric properties to said impact layer and increased shock tolerance to said multiple layer sheet material.

21. A sheet material according to claim 20, wherein the composition of the second layer (14) comprises at least 40% polypropylene by weight.

22. A sheet material according to claim 20 or claim 21, wherein the composition of said fourth layer (28B) comprises polyethylene terephthalate.

17

23. A sheet material according to any of claims 20 to 22, including, as a third component of said fifth layer (12), a second polymeric composition providing elastomeric properties to said impact layer and increased shock tolerance to said multiple layer sheet material, said third component for example being an ethylene butene-1 copolymer containing 85 -95% ethylene.

24. A sheet material according to any one of claims 20 to 23, wherein the composition of the second layer (14) comprises a polypropylene polymer and the second component of the fifth layer (12) comprising polyisobutylene.

25. A sheet material according to any one of claims 20 to 23, wherein the composition of the second layer (14) comprises a polymer selected from polyisobutylene and ethylene butene-1 copolymers containing 85% to 95% ethylene and providing elastomeric properties.

26. A sheet material according to any one of claims 20 to 25, wherein the composition of the said second layer (14) comprises a combination of a propylene polymer and a polyethylene having a density of at least about 0.930.

27. A sheet material according to claim 26, wherein the composition of said second layer (14) comprises, as a third component of polymer selected from polyisobutylene and ethylene butene-1 copolymers containing 85% to 95% ethylene.

28. A multiple layer sheet material, comprising:

(a) a first layer of vinylidene chloride copolymer;

(b) a second sealant layer comprising at least 40% by weight polypropylene;

(c) a third impact layer between said first and second layers, the composition of said impact layer comprising (i) as a first component, a polypropylene polymer, and (ii) as a second component, a polymeric composition providing elastomeric properties to said impact layer and increased shock tolerance to said multiple layer sheet material; and

(d) a fourth layer of polyethylene terephthalate, said first layer being between said third and fourth layers.

29. A sheet material according to claim 28, wherein the second component of said third layer is selected from polyisobutylene and ethylene butene-1 copolymers containing 85% to 95% ethylene, said third layer optionally including a third component which is a second polymeric composition providing elastomeric properties to said third impact layer and shock tolerance to said multiple layer sheet material.

30. A sheet material according to claim 28 or claim 29, wherein said second layer comprises a mixture of polypropylene and a polyethylene having a density of at least about 0.930.

31. A package made with a sheet material of any one of claims 1 to 30.

10

16
12
14

FIG. 1

4    10    3    5

4

2

FIG. 2

4

6

6

10

6

10

6

8

FIG. 3

20
18
20
24
12
14

16

FIG. 4

FIG. 5

FIG. 6

FIG. 7

FIG. 8

FIG. 9

FIG.10

FIG.11

FIG.12

**FIG. 13**

47
34
46
44
42
44
46
48
12
14
16

**FIG. 14**

47
34
46
44
42
44
46
48
12
24
18
24
14
16
12
14

**FIG. 15**

20
18
20
24
12
50B
52
50A
16
14

FIG. 16

FIG. 17